# EUROPEAN PATENT APPLICATION

(11) **EP 4 072 082 A1**
(43) Date of publication of application: **12.10.2022**
(21) Application number: 20908493.8
(22) Date of filing: 26.11.2020
(51) Int. Cl.: H04L 12/727

(54) **ROUTE CALCULATION METHOD AND DATA TRANSMISSION METHOD**

(30) Priority: 30.12.2019 CN 201911396549
(71) Applicant: ZTE Corporation, Shenzhen, Guangdong 518057 (CN)
(72) Inventor: KE, Zhiyong, Shenzhen, Guangdong 518057 (CN)
(74) Representative: Canzler & Bergmeier Patentanwälte Partnerschaft mbB
(86) International application number: PCT/CN2020/131839
(87) International publication number: WO 2021/135746

(57) **Abstract**

Provided is a routing calculation method applied to an SDN controller. The route calculation method comprises: monitoring a network resource state of a forwarding layer; and when the network resource state of the forwarding layer changes, calculating a route with the optimal time delay for a monitored predetermined service according to a changed network resource. Further provided are a data transmission method, a service processing method, a routing calculation module, an SDN controller, a computer-readable storage medium and a terminal device.

## Description

### CROSS-REFERENCE TO RELATED APPLICATION

This application is filed on the basis of Chinese patent application No. 201911396549.6 filed December 30, 2019, and claims priority of the Chinese patent application, the entire contents of which are incorporated herein by reference.

### TECHNICAL FIELD

The present application relates to the field of Software Defined Networks (SDNs), and in particular, to a route calculation method, a data transmission method, a service processing method, an SDN controller, a terminal, and a computer-readable storage medium.

### BACKGROUND

SDN is an open network architecture characterized by centralized control and network programmability, which allows network management personnel to perform management and operation on the entire network through software programming.

In an SDN network, the logical control function and the data forwarding function are separated, and a software-based network controller is used to realize the logical control function of the network.

Existing SDN networks have the function of delay-based routing, i.e., during setup of a service, delays of routes between two nodes that implement the service may be automatically measured and sorted, so as to automatically select a route with an optimal delay.

However, the data transmission efficiency in the case of using the delay-based routing method in the related technology still needs to be improved.

### SUMMARY

An object of the present application is to provide a route calculation method, a data transmission method, a service processing method, an SDN controller, a terminal, and a computer-readable storage medium.

To achieve the above object, in accordance with an aspect of the present application, a route calculation method is provided, which is applied to an SDN controller. The method includes: monitoring a network resource status of a forwarding layer; and calculating a route with an optimal delay for a monitored predetermined service according to a changed network resource in response to a change in the network resource status of the forwarding layer.

In accordance with another aspect of the present application, a data transmission method is provided, which is applied to an SDN controller. The data transmission method includes: determining a route with an optimal delay for a monitored predetermined service according to a predetermined algorithm, where the predetermined algorithm is the route calculation method provided in the present application; and migrating the monitored predetermined service to the route with the optimal delay in response to a predetermined condition being satisfied.

In accordance with another aspect of the present application, a service processing method is provided. The method includes: generating a service creation instruction, where the service creation instruction includes delay monitoring configuration information or delay monitoring cancellation information, the delay monitoring configuration information is configured for controlling the SDN controller to execute the data transmission method provided in the present application, and the delay monitoring cancellation information is configured for controlling the SDN controller to stop execution of the data transmission method provided in the present application; and sending the service creation instruction to the SDN controller.

In accordance with yet another aspect of the present application, a route calculation module is provided. The module includes: a monitoring unit, configured for monitoring a network resource status of a forwarding layer; and a calculation unit, configured for calculating a route with an optimal delay for a monitored predetermined service according to a changed network resource in response to a change in the network resource status of the forwarding layer.

In accordance with yet another aspect of the present application, an SDN controller is provided. The SDN controller includes: a storage module, storing an executable program; and one or more processors, where the executable program, when executed by the one or more processors, causes the one or more processors to carry out the route calculation method provided in the present application or cause the one or more processors to carry out the data transmission method provided in the present application.

In accordance with yet another aspect of the present application, provided is a computer-readable storage medium storing an executable program which, when executed by a processor, causes the processor to carry out the route calculation method provided in the present application or the data transmission method provided in the present application.

In accordance with still another aspect of the present application, a terminal device is provided. The terminal device includes: an instruction generation module, configured for generating a service creation instruction, where the service creation instruction includes delay monitoring configuration information or delay monitoring cancellation information, the delay monitoring configuration information is configured for controlling an SDN controller to execute the data transmission method provided in the present application, and the delay monitoring cancellation information is configured for controlling the SDN controller to stop execution of the data transmission method provided in the present application; and an instruction sending module, configured for sending the service creation instruction to the SDN controller.

In accordance with still another aspect of the present application, provided is a computer-readable storage medium storing an executable program which, when executed by a processor, causes the processor to carry out the service processing method provided in the present application.

### BRIEF DESCRIPTION OF DRAWINGS

The drawings are provided for further understanding of the present application, and constitute a part of the description. The drawings and the detailed description below are used to illustrate the present application, and are not intended to limit the present application, in which:
FIG. 1 is a flowchart of a route calculation method according to an embodiment of the present application;
FIG. 2 is a schematic architecture diagram of an SDN network;
FIG. 3 is a schematic diagram of rerouting of a single service;
FIG. 4 is a schematic diagram of rerouting of multiple services;
FIG. 5 is a flowchart of a route calculation method according to another embodiment of the present application;
FIG. 6 is a flowchart of a data transmission method according to an embodiment of the present application;

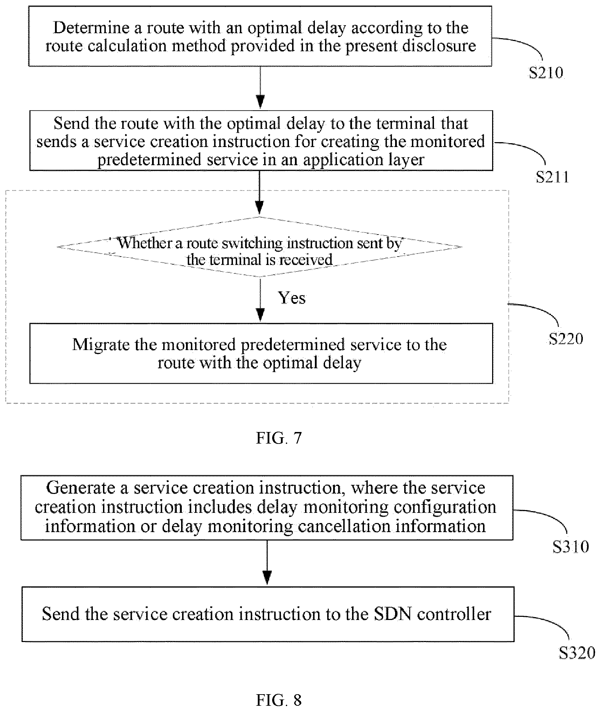

FIG. 7 is a flowchart of a data transmission method according to another embodiment of the present application;
FIG. 8 is a flowchart of a service creation method according to an embodiment of the present application;

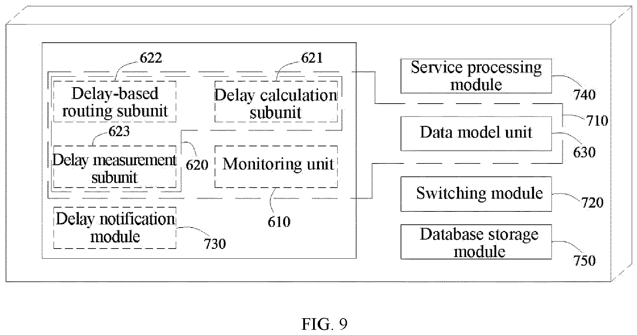

FIG. 9 is a schematic block diagram of an SDN controller according to the present application;
FIG. 10 is a schematic diagram of an SDN system according to the present application;
FIG. 11 is a schematic block diagram of a terminal device according to the present application;
FIG. 12 is a flowchart of Embodiment one of the present application;
FIG. 13 is a flowchart of Embodiment two of the present application;
FIG. 14 is a flowchart of Embodiment three of the present application; and
FIG. 15 is a flowchart of Embodiment four of the present application.

### DETAILED DESCRIPTION

The specific embodiments of the present application will be described in detail with reference to the accompanying drawings. It should be understood that the specific embodiments described herein are merely used for illustrating and explaining the present application, and are not intended to limit the present application.

The reasons why the data transmission efficiency in the related technology is still low are provided as follows.

In an SDN network, the status of links of the forwarding layer always change. When a method disclosed in the related technology is used to transmit data, it can only be ensured that the delay at the time of service setup is optimal. When the network resource status of the forwarding layer is consistent with the status at the time of service setup, the route of the service at the time of service setup is optimal. However, once a link state change occurs in the forwarding layer, it cannot be ensured whether the delay of the current route of the service is still optimal.

In accordance with the present application, a route calculation method, a data transmission method, a service processing method, an SDN controller, a terminal, and a computer-readable storage medium are provided. The route calculation method can ensure that a service is still on a link with an optimal delay after the service starts.

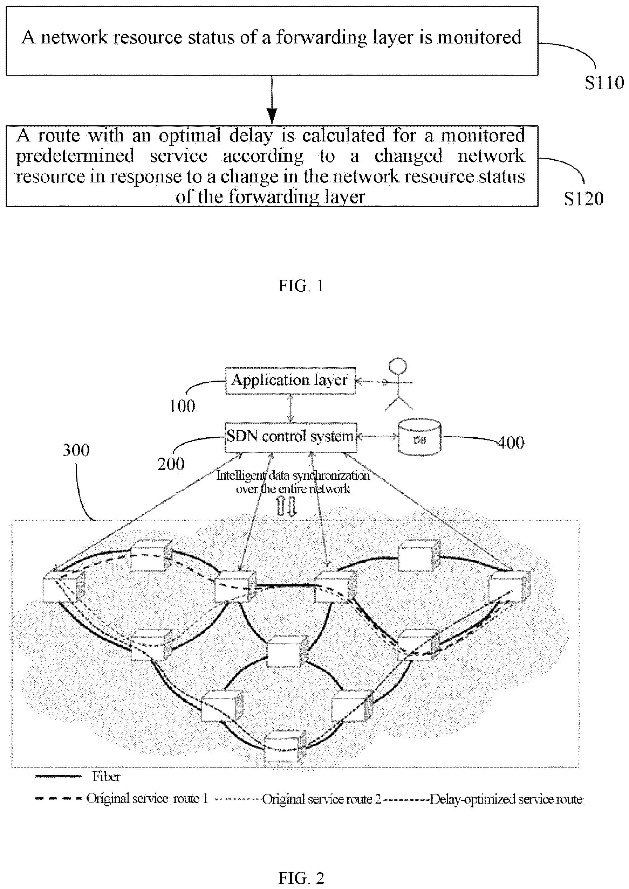

In view of the above, in accordance with a first aspect of the present application, a route calculation method based on an SDN network is provided. As shown in FIG. 1, the route calculation method includes steps S110 to S120.

At S 110, a network resource status of a forwarding layer is monitored.

At S120, a route with an optimal delay is calculated for a monitored predetermined service according to a changed network resource in response to a change in the network resource status of the forwarding layer.

As shown in FIG. 2, the SDN network includes three parts: an application layer 100, an SDN controller 200, and a forwarding layer 300. The route calculation method provided in the present application is executed by the SDN controller 100. The SDN controller 200 communicates with the application layer 100 through a northbound interface. The SDN controller 200 communicates with the forwarding layer 300 through a southbound interface. In an example, the SDN network may further include a database 400.

In the route calculation method provided in the present application, the network resource status of the forwarding layer is monitored at S 110, and once the network resource status of the forwarding layer 300 changes, link delays of links capable of executing the predetermined service in the forwarding layer 300 also change. The route with the optimal delay is recalculated for the monitored predetermined service at S120.

After the route with the optimal delay is calculated, the predetermined service may be manually switched to the route with the optimal delay by a user, or the predetermined service may be automatically switched to the route with the optimal delay by the SDN controller.

As can be seen, in the process of service execution, by utilizing the route calculation method provided in the present application to calculate the route with the optimal delay and switching the service to the route with the optimal delay according to the result, it can be ensured that the service is always on the route with the optimal delay during the entire process of service execution, thereby improving the efficiency of service execution.

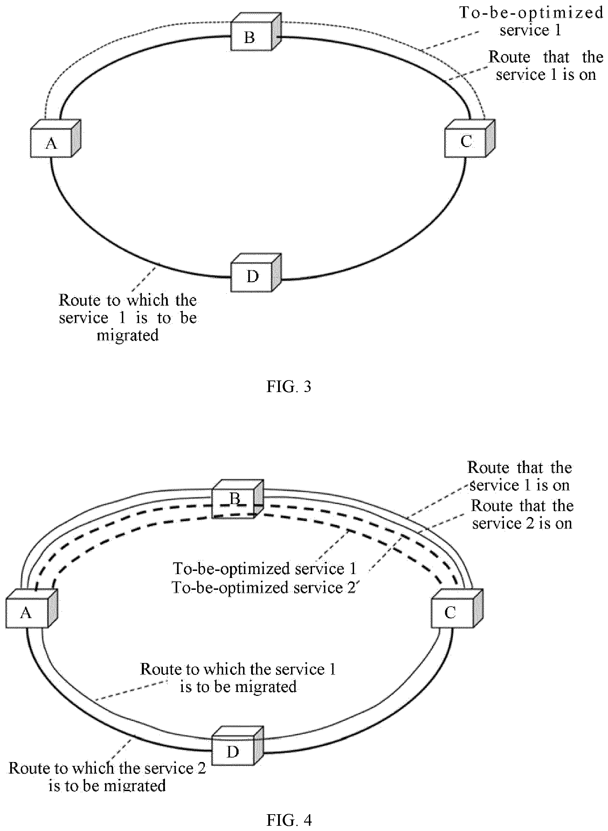

The route calculation method provided in the present application will be explained below by taking FIG. 3 as an example.

It is assumed that a current route of the predetermined service (i.e., a service 1 to be optimized) is a service route (node A→node B→node C) (i.e., a route that the service 1 is on in FIG. 3), and after the network resource status in the forwarding layer changes, a route with the optimal delay is calculated for the predetermined service and determined as a service route (node A→node D→node C) (i.e., a route to which the service 1 is to be migrated in FIG. 3). The predetermined service may be manually switched from the route that the service 1 is on to the route to which the service 1 is to be migrated by the user, or may be automatically switched from the current route to the route to which the service 1 is to be migrated by the SDN controller. When the service starts, a service route 1 is the route with the optimal delay. When the network resource status changes, the service route (node A→node D→node C) becomes the route with the optimal delay. The switching of the service from the service route (node A→node B→node C) to the service route (node A→node D→node C) can ensure that the delay is always optimal in the process of service execution.

It should be noted that the embodiment shown in FIG. 3 is a schematic diagram of rerouting of a single service, i.e., one service is monitored. However, the present application is not limited thereto, and multiple services may be monitored at the same time. For example, as shown in FIG. 4, two services may be monitored. A route with an optimal delay may be calculated for each of the two services at the same time. A service 1 may be migrated from a service route (node A→node B→node C) to a service route (node A→node D→node C), and a service 2 may also be migrated from the service route (node A→node B→node C) to the service route (node A→node D→node C).

In the present application, the specific situation of the change in the network resource status is not particularly limited. In some embodiments, the change in the network resource status may include a change in a network device topology resource of the forwarding layer, and may also include a change in a link delay of each link capable of executing the predetermined service in the forwarding layer.

In the present application, the type of the "change in the network device topology resource" is not particularly limited. In an example, the change in the network device topology resource includes a change in a link resource and/or a port resource of a network device in the forwarding layer.

Further, the change in the network device topology resource includes at least one of: addition of a link resource, deletion of a link resource, release of a port resource, occupation of a port resource, addition of a new port, or deletion of a port.

Further, the change in the network device topology resource includes at least one of:
disappearing of a link alarm (i.e., a link which is previously unavailable due to an obstruction becomes available again after the obstruction is removed), presence of a new link, occurrence of release of a port resource, or presence of a new port.

As described above, the change in the network resource status of the forwarding layer includes:
a change in a link delay of a link capable of executing the predetermined service in the forwarding layer.

During the monitoring of the network resource status, whether the link delay of each of the above-mentioned links changes may be determined by monitoring data. In an embodiment, when the link delay changes, a determination may be made as to whether the link delay increases or decreases according to a delay before the change (before delay) and a delay after the change (after delay).

In order to facilitate the determination of the route with the optimal delay, in an example, the route calculation method may further include a step S 115 after S110.

At S 115, a link list is generated according to the monitored network resource status, where the link list includes all links capable of implementing the monitored predetermined service.

Correspondingly, the calculating a route with an optimal delay for a monitored predetermined service according to a changed network resource includes steps S121 to S122.

At S121, a delay of each link in the link list is compared with a delay of a current link of the predetermined service.

At S122, the link with an optimal service delay is determined as the route with the optimal delay.

When S121 is performed, the link list may be traversed to determine the route with the optimal delay At S122.

With the route calculation method provided in accordance with the first aspect of the present application, when the network resource status of the forwarding layer changes, the route with the optimal delay may be re-determined for the monitored predetermined service, thereby providing prerequisites to ensure that the service is always executed on the route with the optimal delay.

Once the network resource status in the forwarding layer changes, the route with the optimal delay may be recalculated by using the route calculation method provided in accordance with the first aspect of the present application, providing a basis for always executing the service on the link with the optimal delay.

In accordance with a second aspect of the present application, a data transmission method is provided. As shown in FIG. 4, the data transmission method includes steps S210 to S220.

At S210, a route with an optimal delay is determined according to a predetermined algorithm, where the predetermined algorithm is the route calculation method provided in the present application.

At S220, a monitored predetermined service is migrated to the route with the optimal delay in response to a predetermined condition being satisfied.

The data transmission method provided in the present application is still executed by the SDN controller. In the data transmission method provided in the present application, as long as the predetermined condition is met, the predetermined service being executed can be migrated to the route with the optimal delay, so as to ensure that the predetermined service is not only executed on the route with the optimal delay at the time of service setup, but also is executed on the route with the optimal delay in the process of service execution, thereby improving the efficiency of data transmission.

In the present application, the predetermined condition is not particularly limited. In some embodiments, the SND controller may determine whether to switch the route of the predetermined service. Alternatively, the SDN controller may send information about the route with the optimal delay to the application layer to allow a corresponding application (APP) in the application layer to determine whether to switch the route. It should be noted that the APP is actually installed on a terminal. In other words, the terminal sends a service creation instruction to the SDN controller through the APP.

Correspondingly, Prior to S220, the data transmission method further includes a step S211.

At S211, the route with the optimal delay is sent to the terminal that sends a service creation instruction for creating the monitored predetermined service in the application layer.

Correspondingly, the predetermined condition includes: reception of a route switching instruction sent by the terminal.

It should be noted that although the route switching instruction is sent by the terminal, there are still two situations.

In a first situation, the APP that generates the service creation instruction and is installed on the terminal that executes the predetermined service determines whether the route with the optimal delay reaches a threshold, and if the route with the optimal delay reaches the threshold, sends the route switching instruction.

In a second situation, the route with the optimal delay is displayed, the user inputs switching information through the APP installed on the terminal, the APP converts the switching information into a route switching instruction, and the terminal delivers the route switching instruction to the SDN controller.

If the route switching instruction needs to be delivered by the application layer, it is necessary to report the calculated route with the optimal delay to the application layer. To save network resources, in an example, the data transmission method further includes steps S212 and S213 prior to S220.

At S212, a currently determined route with the optimal delay is compared with a route with an optimal delay that is reported during a previous execution of the predetermined service, in response to a manual switching instruction sent by an application layer; and

At S213, the currently determined route with the optimal delay is reported to the application layer in response to the currently determined route with the optimal delay being different from the route with the optimal delay reported during the previous execution.

The situation where the SDN controller determines whether to switch the service route further includes two specific cases.

In a first case, the SDN controller determines whether to switch the service route according to a result of comparison between the route with the optimal delay and the current route.

In a second case, the SDN controller determines whether to automatically switch the service route according to a configuration attribute of the predetermined service.

The second case is described in detail below. When configuring and creating the predetermined service, the application layer configures an "automatic route switching attribute" in the configuration attribute of the predetermined service. As long as the SDN controller can obtain this attribute, the SDN controller can switch the current route to the route with the optimal delay.

In the present application, the condition for performing S210 is not particularly limited. For example, the predetermined service may be a service specified by the user. As long as the predetermined service starts to be executed, S210 is performed, i.e., the route calculation method provided in accordance with the first aspect of the present application is performed immediately.

For example, the predetermined service is a mail sending service specified by the user. As long as the mail sending service is executed, S210 is performed.

Certainly, a monitoring start instruction delivered by the APP of the application layer may also be used as a triggering condition for performing S210.

For example, the APP of the application layer delivers a delay monitoring instruction, where the delay monitoring instruction includes a delay monitoring setting instruction and a service ID list.

The SDN controller traverses the service ID list to determine a service being executed, and takes the service as the predetermined service. S210 is then performed, i.e., the route calculation method is performed for the predetermined service.

In an example, the data transmission method may further include:
retrieving monitored service information from a database in response to an SDN controller restart instruction. That is to say, when restarted, the SDN controller can automatically recover delay data that is before the restart of the SDN controller, thereby improving the response speed.

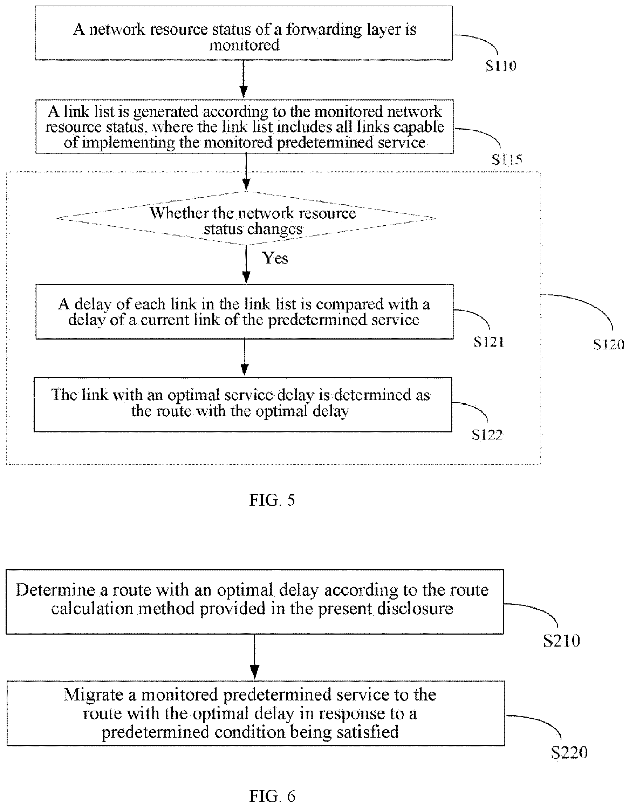

In accordance with a third aspect of the present application, a service processing method is provided. As shown in FIG. 5, the data transmission method includes steps S310 to S320.

At S310, a service creation instruction is generated, where the service creation instruction includes delay monitoring configuration information or delay monitoring cancellation information, the delay monitoring configuration information is configured for controlling the SDN controller to execute the data transmission method provided in the present application, and the delay monitoring cancellation information is configured for controlling the SDN controller to stop execution of the data transmission method of any one of claims 7 to 11.

At S320, the service creation instruction is sent to the SDN controller.

As described above, when the configuration attribute of the predetermined service includes automatic route switching information, the SDN controller may automatically migrate the predetermined service to the optimal route. Correspondingly, the service creation instruction further includes the automatic route switching information.

Certainly, the present application is not limited thereto. The service creation instruction may further include non-automatic route switching information, and the non-automatic route switching is configured for controlling the SDN controller to report the route with the optimal delay to a terminal that creates the predetermined service. Further, the route with the optimal delay is reported to an APP that is installed on the terminal and creates the predetermined service.

In order to facilitate the monitoring by operation personnel, the SDN controller may further send configuration success information to the APP installed on the terminal after performing the data transmission method provided in the present application according to the delay monitoring configuration information in the service creation instruction. Certainly, if the SDN controller receives the delay monitoring configuration information but cannot perform the data transmission method provided in the present application, the SDN controller may send configuration failure information to the APP installed on the terminal.

As described above, when the SDN controller receives the delay monitoring cancellation information, the SDN controller stops execution of the data transmission method provided in the present application, stores the delay monitoring configuration information in the database, and returns modification success information to the APP installed on the terminal.

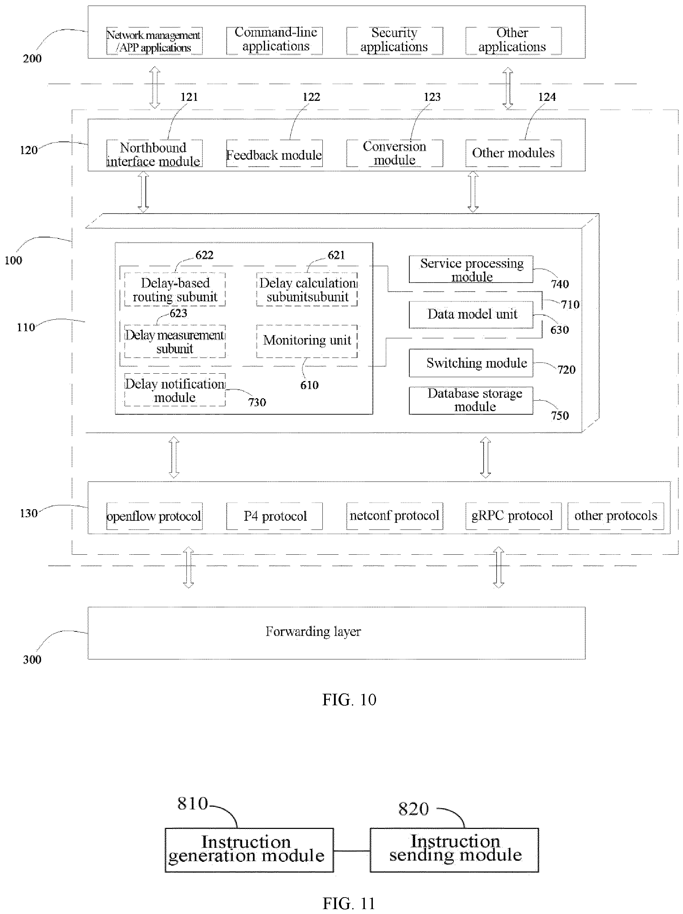

In accordance with a fourth aspect of the present application, a route calculation module is provided. As shown in FIG. 10, the route calculation module includes a monitoring unit 610 and a calculation unit 620. The route calculation module is configured for performing the route calculation method provided in accordance with the first aspect of the present application.

The monitoring unit 610 is configured for monitoring a network resource status of a forwarding layer. The calculation unit 620 is configured for calculating a route with an optimal delay for a monitored predetermined service according to a changed network resource in response to a change in the network resource status of the forwarding layer.

The operating principle and beneficial effects of the route calculation method have been described in detail above, and will not be repeated here.

As described above, the change in the network resource status includes a change in a network device topology resource of the forwarding layer. Correspondingly, the route calculation module may include a data model unit 630. The data model unit 630 is configured for encapsulating, upon reception of a notification indicating a change in the network device topology resource, a network device topology resource before the resource change and a network device topology resource after the resource change to generate a topology resource change notification, and sending the topology resource change notification to the monitoring unit 610. The calculation unit 620 is configured for analyzing the topology resource change notification, and storing the route with the optimal delay in a memory.

As described above, the change in the network device topology resource includes a change in a link resource and/or a port resource of a network device in the forwarding layer.

Further, the change in the network device topology resource includes at least one of:
disappearing of a link alarm, presence of a new link, occurrence of release of a port resource, or presence of a new port.

In the present application, the storage form of the route with the optimal delay in the memory is not particularly limited. In some embodiments, the storage form may be Map<service_id, delaymonitorinfo>.

In the present application, the specific form of the calculation unit 620 is also not particularly limited. In some embodiments, the calculation unit 620 may include a delay calculation subunit 621, a delay-based routing subunit 622, and a delay measurement subunit 623.

The delay measurement subunit 623 is configured for calculating delays of all links capable of executing the predetermined service according to the received network resource status. The delay-based routing subunit 622 is configured for selecting the route with the optimal delay according to a calculation result of the delay calculation subunit 621.

As described above, when the route calculation method is performed, the delay calculation subunit 621 may generate a link list according to the monitored network resource status. The delay-based routing subunit 622 may traverse the monitored service information list, and extract the monitored predetermined service from the monitored service information list. In addition, the delay-based routing subunit 622 may further compare a delay of a current route of the predetermined service with the link delay of each link in the link list, and determine the route with the optimal delay by determining whether the link delay of the links in the link list is lower than the delay of the current route.

In accordance with a fifth aspect of the present application, an SDN controller is further provided. The SDN controller provided in accordance with the fifth aspect of the present application is configured for performing the data transmission method provided in accordance with the second aspect of the present application. As shown in FIG. 10, the SDN controller includes the route calculation module 710 provided in accordance with the fourth aspect of the present application and a switching module 720.

As described above, the route calculation module 710 is configured for performing the route calculation method provided in accordance with the first aspect of the present application. The switching module is configured for performing S210, i.e., migrating the monitored predetermined service to the route with the optimal delay in response to a predetermined condition being satisfied.

As described above, the data transmission method includes sending the route with the optimal delay to an APP that creates the monitored predetermined service in the application layer. Correspondingly, the SDN controller may further include a delay notification module 730. The delay notification module 730 is configured for performing the step of "sending the route with the optimal delay to an APP that creates the monitored predetermined service in the application layer".

In an example, the SDN controller may further include a service processing module 740. The service processing module 740 is configured for allocating various resources, performing path computation, and down-crossing devices in the forwarding layer.

In an example, the SDN controller may further include a database storage module 750. The database storage module 750 is configured for implementing operations such as addition, deletion, modification, and query of various data, providing interfaces for accessing various data, providing interfaces for accessing various databases, and providing a data access resource pool and a data factory, etc.

In accordance with a fifth aspect of the present application, an SDN controller is provided, which includes: a storage module, storing an executable program; and one or more processors, where the executable program, when executed by the one or more processors, causes the one or more processors to carry out the route calculation method provided in accordance with the first aspect of the present application or cause the one or more processors to carry out the data transmission method provided in accordance with the second aspect of the present application.

In accordance with the present application, an SDN control system is further provided. As shown in FIG. 10, the system includes: a northbound control management layer 120, configured for communicating with an application layer; a southbound service layer 130, configured for communicating with a forwarding layer 300; and the SDN controller 100 provided in the present application.

As described above, the SDN controller 100 may calculate a route with an optimal delay for the service being executed currently according to the network resource status of the forwarding layer 300, thereby improving the efficiency of data transmission.

In the present application, the specific structure of the northbound control management layer 120 is not particularly limited. For example, in the embodiment shown in FIG. 10, the northbound control management layer 120 includes a northbound interface module 121, a feedback module 122, and a conversion module 123.

The northbound interface module 121 may implement at least one of the following functions: conversion of APP and SDN controller interfaces, definition of a YANG file, definition of a protobuf file, definition of an RPC method, conversion of a byte order, notification of an execution result message, monitoring, etc.

The feedback module 122 is configured for feeding back status information of the SDN controller, link discovery information, service routing information, service migration information, service return information, link delay information, link recovery information, and real-time topology information to network management personnel. In addition, the feedback module 122 is configured for feeding back a communication status of a controller supervisor to the network management personnel. For example, when detecting a fault in the controller supervisor, the feedback module 122 sends an alarm to the user in time, to prompt the user to restart the SDN controller supervisor or maintain the controller supervisor.

The conversion module 123 is mainly configured for adapting a message such as a JSON message delivered by the APP to a data format, such as a data format defined by the YANG file, for window maintenance, analog cutover, fiber cutover, and cutover rollback via northbound, and converting a data format reported by window maintenance, analog cutover, fiber cutover, and cutover rollback to a data format supported by the APP, such as a JSON data format, for reporting.

In addition to the northbound interface module 121, the feedback module 122, and the conversion module 123, the northbound control management layer 120 may further include other reserved applications 124, to implement at least one of functions of monitoring the controller, implementing software upgrade of the controller, enabling a log function, checking for memory leaks, implementing restart and maintenance of the controller supervisor, and receiving a controller selection or designation from maintenance personnel.

The southbound service layer 130 implements communication between the SDN controller and the forwarding layer through various southbound protocols (including, but not limited to netconf, P4, openflow, etc.).

In some embodiments, the SDN controller is based on a microservice framework.

That is to say, the monitoring unit and the route calculation unit in the SDN controller may be released in the form of microservices. In the present application, the specific mode of the microservice is not particularly limited. For example, the monitoring unit and the route calculation unit may be released in the form of a Platform as a Service (PaaS) microservice.

Since the SDN controller provided in the present application is based on a microservice framework, the coupling degree between functional modules is low, and each functional module has the advantages of independence, easy scaling, and easy deployment.

The so-called "microservice framework" means that both northbound and southbound of the SDN controller are implemented using microservices, and each module, unit, and subunit of the SDN controller is a microservice. In addition, northbound protocols or tools of the SDN controller are also microservices. The northbound protocols or tools of the SDN controller may include, but not limited to, restful, gRPC, tapi, yangtools, and the like. In this way, different versions of tapi or yangtools can coexist without interfering with each other. A change in the interfaces does not lead to incompatibility between old and new functions of the SDN controller, thereby ensuring smooth upgrading of the functions of the SDN controller.

There are multiple southbound protocols for the southbound of the SDN controller. Different southbound protocols are released as microservices. Different versions of the same southbound protocol may exist at the same time, enabling the SDN controller to smoothly support new and old products. In addition, the southbound protocols can also be easily migrated to other projects, thereby improving the scalability. Since the microservices are easy to uninstall, unnecessary microservices can be easily removed when a new product is released, thereby ensuring the lightweight of the SDN controller.

In the present application, the architecture of the application layer 200 is not particularly limited. In an example, applications in the application layer may include:
security applications, which are mainly security service applications deployed in a network to build a security defense mechanism of the network;
network management applications, which are applications accessed by network management personnel, and are configured for managing and monitoring the network;
command-line applications, which are applications accessed by controller management personnel, and are configured for implementing configuration, query and other operations of the controller through command lines reserved by the controller (non-open source), to realize some verification and debugging functions; and
third-party applications, which refer to common applications accessed by a third party, and are configured for implementing custom functions by calling an open-source Application Programming Interface (API) of the SDN controller.

In accordance with a sixth aspect of the present application, provided is a computer-readable storage medium storing an executable program which, when executed by a processor, causes the processor to carry out the route calculation method provided in accordance with the first aspect of the present application or the data transmission method provided in accordance with the second aspect of the present application.

In accordance with a seventh aspect of the present application, a terminal device is provided. As shown in FIG. 11, the terminal device includes an instruction generation module 810 and an instruction sending module 820.

The instruction generation module 810 is configured for performing step S310, i.e., the instruction generation module 810 is configured for generating a service creation instruction. The service creation instruction includes delay monitoring configuration information or delay monitoring cancellation information. The delay monitoring configuration information is configured for controlling an SDN controller to execute the data transmission method provided in the present application. The delay monitoring cancellation information is configured for controlling the SDN controller to stop execution of the data transmission method provided in the present application.

The instruction sending module 820 is configured for performing step S320, i.e., the instruction sending module 820 is configured for sending the service creation instruction to the SDN controller.

In accordance with an eighth aspect of the present application, provided is a computer-readable storage medium storing an executable program which, when executed by a processor, causes the processor to carry out the service processing method provided in the present application.

The computer-readable storage medium includes volatile and nonvolatile, removable and non-removable media implemented in any method or technology for storage of information (such as computer readable instructions, data structures, program modules, or other data). The computer-readable storage medium includes, but is not limited to, a random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a magnetic disc, a magnetic tape, a magnetic storage or other magnetic storage medium, or any other medium which can be used to store the desired information and which can be accessed by a computer.

The operating principle of the SDN control system provided in the present application will be described in detail below through embodiments.

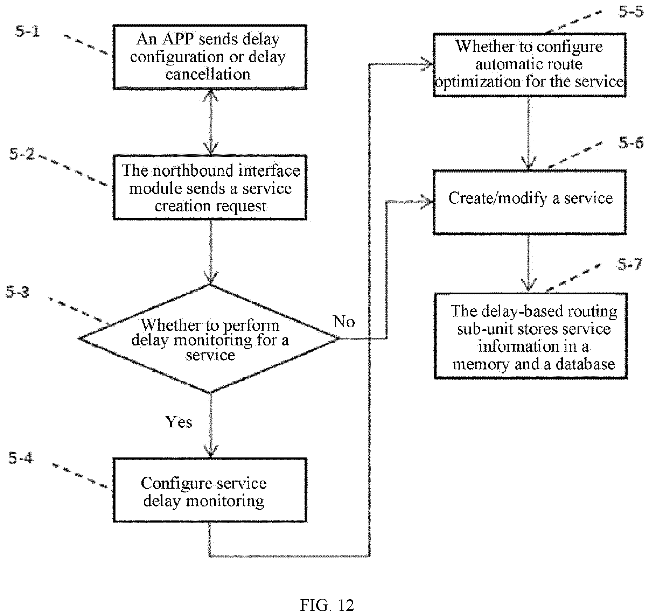

FIG. 12 is a flowchart of performing the service creation method provided in Embodiment one of the present application in an SDN network, including following steps 5-1 to 5-7.

At step 5-1, a terminal device installed with an APP sends a user request to the northbound interface module of the SDN control system through the APP, where the user request includes a delay operation instruction. Methods of sending the user request include, but are not limited to, protocol interfaces such as restful, gRPC, and http.

At step 5-2, the northbound interface module sends a service creation request to a northbound adaptation module which receives a maintenance window creation request from the APP, adapts the maintenance window creation request to a create maintenance window request, and sends the create maintenance window request to the conversion module of the northbound control management layer, to convert the create maintenance window request to a message of a data structure type that can be processed by an SND controller.

At step 5-3, the SDN controller determines according to the converted service creation request whether to perform delay monitoring for a service. If yes, the process proceeds to step 5-4; otherwise, the process proceeds to step 5-5.

At step 5-4, service delay monitoring is configured through the SDN controller, and delay monitoring setting information is configured in an input object for service creation.

At step 5-5, whether to configure automatic route optimization for the service is determined by analyzing the user request, and whether to automatically optimize information is configured in an input object for service creation/modification.

At step 5-6, a service is created/modified, and a normal service creation or modification process is performed.

At step 5-7, the delay-based routing sub-unit stores service information in a memory and a database. The delay module saves service ID information in the memory to increase the speed of service optimization, and saves a service ID in the database, so that data can be recovered during restart of the controller.

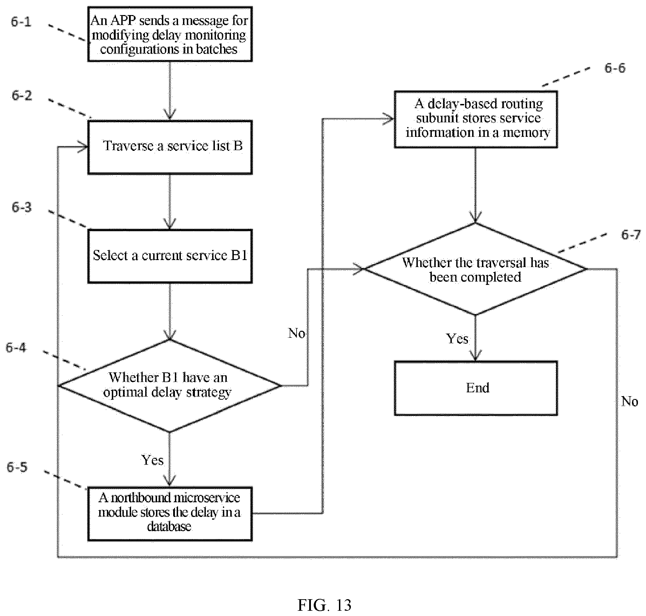

FIG. 13 is a flowchart of modifying service delay monitoring configurations in batches in Embodiment two of the present application.

At step 6-1, a terminal installed with an APP sends a message for modifying delay monitoring configurations in batches to the SDN controller through the APP. The APP sends a user request indicating batch creation of delay monitoring configurations for services to the SDN controller. The user request needs to include, but not limited to, delay monitoring configuration or cancellation information, automatic or non-automatic replacement of service information, a service ID list, etc.

If the user request includes delay monitoring cancellation, the SDN controller removes a service ID option from a memory Map<service id, delaymonitorinfo>, stores configuration information indicating delay monitoring cancellation in a database, and returns information indicating whether each modification is successful or fails.

If the user request contains delay monitoring configuration, following steps are performed.

At step 6-2, the SDN controller traverses a service list B.

At step 6-3, a predetermined service B1 being currently executed is selected.

At step 6-4, a determination is made as to whether a current route of the predetermined service B1 is a route with an optimal delay.

When a determination result at step 6-4 is yes, the process proceeds to step 6-5; otherwise the process proceeds to step 6-7.

At step 6-5, a northbound microservice module calls a data storage interface, stores the route with the optimal delay in a database, and returns information indicating whether each modification is successful or fails.

At step 6-7, a determination is made as to whether the traversal of the service list B has been completed.

When a determination result at step 6-7 is yes, the process ends; otherwise, the process goes back to step 6-2.

At step 6-5, if the storage to the database is successful, the northbound calls a delay monitoring module to modify monitored service IDs maintained in the memory, and stores the service ID and delay monitoring information in the memory, e.g., Map<service_id, delaymonitorinfo>. The storage method is to put the service ID, automatic or non-automatic replacement, and a pre-calculation result in a class DelayMonitorInfo.java, and then store the same in the form of a Map<service_id, delaymonitorinfo> to facilitate the maintenance of delay configuration information and the returning of a result indicating whether the configuration is successful or fails.

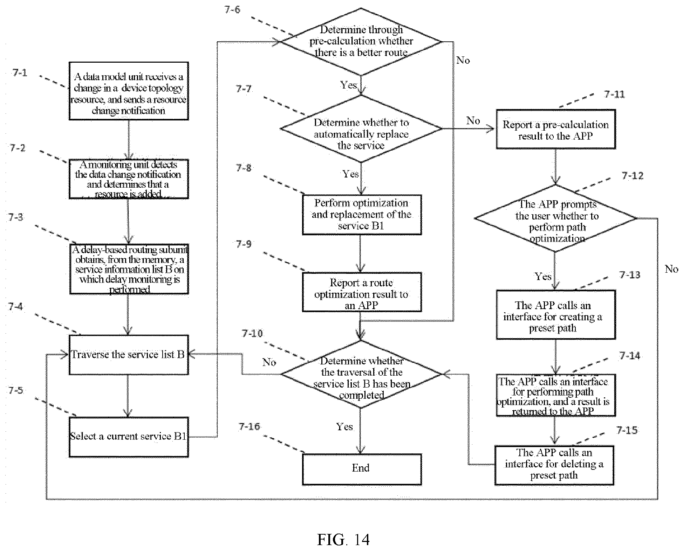

FIG. 14 is a flowchart of delay-based routing in the case of resource addition in Embodiment three of the present application, which includes following steps 7-1 to 7-15.

At step 7-1, a data model unit receives a change in a network device topology resource of a forwarding layer, and sends a resource change notification. The data model unit receives and analyzes a notification of the change in the network device topology resource, encapsulates information such as notifications before and after the resource change, and sends a notification indicating a change in link and port resources, including, but not limited to, disappearing of a link alarm, presence of a new link, occurrence of release of a port resource, presence of a new port, etc.

At step 7-2, a monitoring unit detects the data change notification and determines that a resource is added. The monitoring unit as a delay microservice detects the notification, analyzes information about the added resources, performs different processing on different resources, and stores the information in an object in a delay memory. The memory may be in the form of, for example, but not limited to, Map<service id, delaymonitorinfo>.

At step 7-3, a delay-based routing subunit obtains, from the memory, a service information list B on which delay monitoring is performed. The delay-based routing subunit obtains, from the memory Map<service _id, delaymonitorinfo>, the service information list B on which delay monitoring is performed.

At step 7-3, a delay-based routing subunit obtains, from the memory, a service information list B on which delay monitoring is performed. The delay-based routing subunit obtains, from the memory Map<service _id, delaymonitorinfo>, the service information list B on which delay monitoring is performed.

At step 7-4 and step 7-5, the service information list B on which delay monitoring is performed is traversed, and a current service B1 is selected.

At step 7-6, a determination is made through pre-calculation as to whether there is a better route. Pre-calculation is performed according to information of the service B1 to determine whether there is a better route. If yes, the process proceeds to step 7-7; otherwise, the process proceeds to step 7-10.

At step 7-7, a determination is made as to whether to automatically replace the service.

If a determination result at step 7-7 is yes, the process proceeds to step 7-8; otherwise,, the process proceeds to step 7-11.

At step 7-8, optimization and replacement of the service B1 is performed. A delay module calls a service module interface to implement service optimization and replacement.

At step 7-9, a route optimization result is reported to an APP. The delay module sends a notification to a northbound structure module. After receiving the notification, the northbound structure module sends a notification to the APP to notify the APP of the route optimization result.

At step 7-10, a determination is made as to whether the traversal of the service list B has been completed.

If a determination result at step 7-10 is yes, the process ends; otherwise, the process goes back to step 7-4.

At step 7-11, a pre-calculation result is reported to the APP. The SDN controller calls a pre-calculation interface. If the pre-calculation is successful, a delay of a pre-calculated route is compared with a delay of a current service route. If the delay of the pre-calculated route is shorter than the delay of the current service route, a comparison is made as to whether the pre-calculated route is the same as a previously reported route. If not, the calculated route with the optimal delay is reported to the APP.

At step 7-12, the APP prompts the user whether to perform path optimization.

If the result at step 7-12 is yes, the process proceeds to step 7-13; otherwise, the process goes back to step 7-5.

At step 7-13, the APP calls an interface for creating a preset path. A path computation module generates an available path, and returns a result to the APP.

At step 7-14, the APP calls an interface for performing path optimization, to perform a path rerouting function according to the path generated through path computation at step 7-13, and return a result to the APP.

At step 7-15, the APP calls an interface for deleting a preset path, to release a resource, and return a result to the APP.

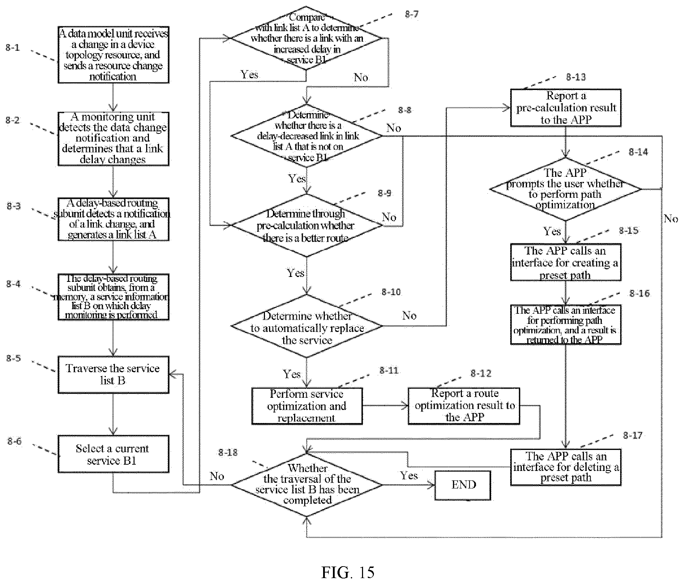

FIG. 15 is a flowchart of delay-based routing in the case of a link change in Embodiment four of the present application, which includes steps 8-1 to 8-18.

At step 8-1, a data model unit receives a change in a device topology resource, and sends a resource change notification. The data model unit receives and analyzes a notification of the change in the device topology resource, encapsulates information such as notifications before and after the resource change, and sends a notification indicating a change in link and port resources.

At step 8-2, a monitoring unit detects the data change notification and determines that a link delay changes. Whether the link delay increases or decreases is determined by, for example, but not limited to, performing subtraction between a delay before the change (before delay) and a delay after the change (after delay).

At step 8-3, a delay-based routing subunit detects a notification of a link change, and generates a link list A.

At step 8-4, the delay-based routing subunit obtains, from a memory, a service information list B on which delay monitoring is performed.

At step 8-5, the service list B is traversed.

At step 8-6, a current service B1 is selected from the service list B.

At step 8-7, a comparison with the link list A is performed to determine whether there is an increased link delay in the service B1. If the determination result at step 8-7 is yes, the process proceeds to step 8-9; otherwise, the process proceeds to step 8-8.

At step 8-8, a determination is made as to whether there is a delay-decreased link in the link list A that is not on the service B1. If the determination result at step 8-8 is yes, the process proceeds to step 8-9; otherwise, the process proceeds to step 8-18.

At step 8-9, a determination is made through pre-calculation as to whether there is a better route. The controller calls a pre-calculation interface. If a determination is made at step 8-9 that there is a better route, the process proceeds to step 8-10; otherwise, the process proceeds to step 8-18.

At step 8-10, a determination is made as to whether to automatically replace the service. If the determination result at step 8-10 is yes, service optimization and replacement are performed; otherwise, the process proceeds to step 8-13.

At step 8-11, service optimization and replacement are performed, and the switching module calls a service module interface to realize service optimization and replacement.

At step 8-12, a route optimization result is reported to the APP. The delay module sends a notification to the northbound module. After receiving the notification, the northbound module sends a notification to the APP to notify the APP of the route optimization result.

At step 8-13, a pre-calculation result is reported to the APP. The SDN controller calls a pre-calculation interface. If the pre-calculation is successful, a delay of a pre-calculated route is compared with a delay of a current service route. If the delay of the pre-calculated route is shorter than the delay of the current service route, a comparison is made as to whether the pre-calculated route is the same as a previously reported route. If not, the new route is reported to the APP.

At step 8-14, the APP prompts the user whether to perform path optimization. If "yes" selected by the user is received, the process proceeds to step 8-15; if "no" selected by the user is received, the process proceeds to step 8-18.

At step 8-15, the APP calls an interface for creating a preset path. An available path is generated by path computation. A result is returned to the APP.

At step 8-16, the APP calls an interface for performing path optimization, to perform a path rerouting function according to the path generated by the path computation at step 8-5, and return a result to the APP.

At step 8-17, the APP calls an interface for deleting a preset path, to release a path computation resource, and return a result to the APP.

At step 8-18, a determination is made as to whether the traversal of the service list B has been completed. If the determination result at step 8-18 is yes, the process ends; otherwise, the process goes back to step 8-5, and services are continued to be traversed.

It should be understood that the above embodiments are only example embodiments for illustrating the principles of the present application, but the present application is not limited thereto. Those having ordinary skill in the art can make various changes and modifications without departing from the protection scope of the present application. Such changes and modifications also fall within the protection scope of the present application.

## Claims

1. A route calculation method, applied to a Software Defined Network, SDN, controller, comprising:
monitoring a network resource status of a forwarding layer; and
calculating a route with an optimal delay for a monitored predetermined service according to a changed network resource in response to a change in the network resource status of the forwarding layer.

2. The route calculation method of claim 1, wherein the change in the network resource status comprises:
a change in a network device topology resource of the forwarding layer and a change in a link delay of a link capable of executing the predetermined service in the forwarding layer, wherein,
the change in the network device topology resource comprises at least one of:
disappearing of a link alarm, presence of a new link, occurrence of release of a port resource, or presence of a new port.

3. The route calculation method of claim 1 or 2, further comprising:
generating a link list according to the monitored network resource status, wherein the link list comprises all links capable of implementing the monitored predetermined service; and
the calculating a route with an optimal delay for a monitored predetermined service according to a changed network resource comprises:
comparing a delay of each link in the link list with a delay of a current link of the predetermined service; and
determining a link with an optimal service delay as the route with the optimal delay.

4. A data transmission method, applied to a Software Defined Network, SDN, controller, comprising:
determining a route with an optimal delay for a monitored predetermined service according to a predetermined algorithm, wherein the predetermined algorithm is the route calculation method of any one of claims 1 to 3; and
migrating the monitored predetermined service to the route with the optimal delay in response to a predetermined condition being satisfied.

5. The data transmission method of claim 4, wherein prior to the migrating the monitored predetermined service to the route with the optimal delay in response to a predetermined condition being satisfied, the data transmission method further comprises:
sending the route with the optimal delay to a terminal that sends a service creation instruction for creating the monitored predetermined service in an application layer, wherein
the predetermined condition comprises:
reception of a route switching instruction sent by the terminal.

6. The data transmission method of claim 4, wherein prior to the migrating the monitored predetermined service to the route with the optimal delay in response to a predetermined condition being satisfied, the data transmission method further comprises:
comparing a currently determined route with the optimal delay with a route with an optimal delay that is reported during a previous execution of the predetermined service, in response to a manual switching instruction sent by an application layer; and
reporting the currently determined route with the optimal delay to the application layer in response to the currently determined route with the optimal delay being different from the route with the optimal delay reported during the previous execution.

7. The data transmission method of claim 4, further comprising:
obtaining a configuration attribute of the monitored predetermined service,
wherein the predetermined condition comprises: the configuration attribute comprising automatic route switching information.

8. The data transmission method of any one of claims 4 to 7, wherein the step of determining a route with an optimal delay for a monitored predetermined service according to a predetermined algorithm is executed in response to a delay monitoring instruction sent by the application layer.

9. The data transmission method of any one of claims 4 to 7, further comprising:
retrieving monitored service information from a database in response to an SDN controller restart instruction.

10. A service processing method, comprising:
generating a service creation instruction, wherein the service creation instruction comprises delay monitoring configuration information or delay monitoring cancellation information, the delay monitoring configuration information is configured for controlling a Software Defined Network, SDN, controller to execute the data transmission method of any one of claims 4 to 9, and the delay monitoring cancellation information is configured for controlling the SDN controller to stop execution of the data transmission method of any one of claims 4 to 9; and
sending the service creation instruction to the SDN controller.

11. The service processing method of claim 10, wherein:
the service creation instruction further comprises automatic route switching information or non-automatic route switching information, wherein the automatic route switching information is configured for controlling the SDN controller to migrate the predetermined service to the route with the optimal delay, and the non-automatic route switching information is configured for controlling the SDN controller to report the route with the optimal delay to a terminal that creates the predetermined service.

12. A route calculation module, comprising:
a monitoring unit, configured for monitoring a network resource status of a forwarding layer; and
a calculation unit, configured for calculating a route with an optimal delay for a monitored predetermined service according to a changed network resource in response to a change in the network resource status of the forwarding layer.

13. A Software Defined Network, SDN, controller, comprising:
a storage module, storing an executable program; and
one or more processors, wherein the executable program, when executed by the one or more processors, causes the one or more processors to carry out the route calculation method of any one of claims 1 to 3 or causes the one or more processors to carry out the data transmission method of any one of claims 4 to 9.

14. A computer-readable storage medium storing an executable program which, when executed by a processor, causes the processor to carry out the route calculation method of any one of claims 1 to 3 or the data transmission method of any one of claims 4 to 9.

15. A terminal device, comprising:
an instruction generation module, configured for generating a service creation instruction, wherein the service creation instruction comprises delay monitoring configuration information or delay monitoring cancellation information, the delay monitoring configuration information is configured for controlling a Software Defined Network, SDN, controller to execute the data transmission method of any one of claims 4 to 9, and the delay monitoring cancellation information is configured for controlling the SDN controller to stop execution of the data transmission method of any one of claims 4 to 9; and
an instruction sending module, configured for sending the service creation instruction to the SDN controller.

16. A computer-readable storage medium storing an executable program which, when executed by a processor, causes the processor to carry out the service processing method of claim 10 or 11.
